# EUROPÄISCHE PATENTSCHRIFT

(11) **EP 3 529 736 B1**
(45) Veröffentlichungstag und Bekanntmachung des Hinweises auf die Patenterteilung: **16.12.2020**
(21) Anmeldenummer: 17783831.5
(22) Anmeldetag: 11.10.2017
(51) Int. Cl.: G06F 21/64, G06F 21/62, H04L 9/32, G06Q 20/40, G06Q 50/18, G07F 7/10, G07F 7/12

(54) **BEREITSTELLUNG UND PRÜFUNG DER GÜLTIGKEIT EINES VIRTUELLEN DOKUMENTS**
PROVIDING AND CHECKING THE VALIDITY OF A VIRTUAL DOCUMENT
FOURNITURE ET CONTRÔLE DE LA VALIDITÉ D'UN DOCUMENT VIRTUEL

(30) Priorität: 21.10.2016 DE 102016220656
(43) Veröffentlichungstag der Anmeldung: 28.08.2019
(73) Patentinhaber: Bundesdruckerei GmbH, 10969 Berlin (DE)
(72) Erfinder: HORVATH, Olaf, 10317 Berlin (DE)
(74) Vertreter: Richardt Patentanwälte PartG mbB
(86) Internationale Anmeldenummer: PCT/EP2017/075940
(87) Internationale Veröffentlichungsnummer: WO 2018/073071

(56) Entgegenhaltungen:
- WO-A1-2016/015041
- US-A1- 2014 270 400
- US-A1- 2014 279 519
- Anonymous: "blocks - Storing document/file in blockchain - Ethereum Stack Exchange", , 8. August 2016 (2016-08-08), XP055432335, Gefunden im Internet: URL:https://ethereum.stackexchange.com/que stions/7842/storing-document-file-in-block chain [gefunden am 2017-12-06]

## Beschreibung

Die Erfindung betrifft ein Verfahren zum Bereitstellen und Prüfen der Gültigkeit eines virtuellen Dokuments sowie ein System zur Ausführung des Verfahrens. Insbesondere betrifft die Erfindung ein Verfahren zum Prüfen der Gültigkeit eines mittels eines mobilen Computersystems, beispielsweise eines Smartphones, bereitgestellten virtuellen Dokuments.

Um die Authentizität eines Dokuments nachzuweisen und dieses gegen Fälschungsversuche zu sichern ist die Verwendung einer Vielzahl von unterschiedlichen Sicherheitsmerkmale bekannt. Bei diesen Sicherheitsmerkmalen handelt es sind um charakteristische Eigenschaft des Dokumentenkörpers, welche eine Fälschung unmöglich machen oder zumindest erheblich erschweren sollen.

Diese Merkmale können unter anderem mit chemischen und physikalischen Verfahren überprüft werden, beispielsweise mittels eines UV-Prüfgeräts.

Je bedeutsamer oder wertvoller ein Gegenstand ist, umso mehr Sicherheitsmerkmale weist dieser auf. Dies gilt insbesondere für hoheitliche Dokument wie Ausweise oder Reisepässe.

Die Authentizitätssicherung von Dokumenten mittels des Dokumentenkörpers und von diesem umfassten Sicherheitsmerkmalen, macht es jedoch erforderlich, dass man das entsprechende Dokument stets als physischen Gegenstand mit sich führt. Somit ist es unter Umständen notwendig eine Vielzahl unterschiedlicher physischer Dokumente mit sich führen muss. Eine solche Vielzahl physischer Dokumente ist aber zum einen unhandlich und zum anderen besteht eine hohe Wahrscheinlichkeit, dass zumindest einzelne Dokumente zu Hause liegengelassen werden und damit nicht zur Hand sind, wenn man sie benötigt.

Die feste Bindung der Authentizität genau eines Dokuments an genau einen physischen Dokumentenkörper kann beispielsweise durch eine Verwendung virtueller Dokumente aufgehoben werden. Dies erlaubt beispielsweise mehrere Dokumente auf einem Smartphone mit sich zu führen. Bei Dokumenten mit hohen Sicherheitsanforderungen, wie etwa hoheitlichen Dokument, muss jedoch der Verlust der an den Dokumentenkörper gebundenen Sicherheitsmerkmale kompensiert werden. Dies wird etwa durch zusätzliche Hardwarekomponenten oder Softwarekomponenten erreicht, die implementiert werden müssen um eine ausreichende Sicherheit der virtuellen Dokumente zu gewährleiten. Diese zusätzlichen Komponenten machen entsprechende Computersysteme, die zur sicheren Verwendung virtueller Dokumente geeignet sind, jedoch technisch aufwendig und damit teuer.

Die US 2014/279519 A1 beschreibt ein Verfahren zum Identifizieren eines Nutzers für Transaktionen, welches ein Empfangen eines Bildes eines Identifikationsdokuments des Nutzers während einer ersten Transaktion mit einer ersten Partei umfasst, wobei das Bild unter Verwendung eines Bilderfassungsmoduls eines Nutzergeräts erhalten wird, ein Empfangen einer Geräte-ID des Nutzergeräts, ein Extrahieren von Identifikationsdaten des Nutzers aus dem Bild, ein Speichern der Identifikationsdaten des Nutzers und der Geräte-ID des Nutzergeräts auf einem Server, wobei die Geräte-ID den Identifikationsdaten des Nutzers zugeordnet ist, während einer nachfolgenden Transaktion mit einer zweiten Partei, Empfangen der Geräte-ID des Nutzergeräts, Abrufen der Identifikationsdaten des Nutzers basierend auf der Geräte-ID und Übertragen der abgerufenen Identifikationsdaten an die zweite Partei, um den Nutzer für die nachfolgende Transaktion zu identifizieren.

Der Erfindung liegt die Aufgabe zugrunde, ein einfaches, effizientes und sicheres Verfahren zur Prüfung der Gültigkeit eines virtuellen Dokuments zu schaffen. Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Bereitstellen und Prüfen der Gültigkeit eines ersten virtuellen Dokuments auf einem ersten Computersystem sowie ein entsprechendes Computersystem zum Ausführen des Verfahrens. Das erste virtuelle Dokument wird mittels eines mobilen zweiten Computersystems für das erste Computersystem bereitgestellt. Das erste virtuelle Dokument ist in einer ersten Datenbank eines dritten Computersystems gespeichert, wobei in der ersten Datenbank eine Mehrzahl von virtuellen Dokumenten gespeichert ist. Das erste Computersystem umfasst eine erste Kommunikationsschnittstelle zur kontaktlosen Kommunikation mit dem mobilen zweiten Computersystem sowie zur Kommunikation mit dem dritten Computersystem über ein Netzwerk. Ferner umfasst das erste Computersystem ein erstes Display zum Anzeigen des ersten virtuellen Dokuments. Das erste Computersystem besitzt Zugriff auf eine kryptographisch gesicherte zweite Datenbank, welche Identifikatoren für Paarungen aus Computersystemen und den virtuellen Dokumenten der ersten Datenbank umfasst. Die Identifikatoren der zweiten Datenbank umfassen einen ersten Identifikator einer ersten Paarung aus dem mobilen zweiten Computersystem und dem ersten virtuellen Dokument.

Das Verfahren zum Bereitstellen und Prüfen der Gültigkeit des ersten virtuellen Dokuments umfasst:
- Empfangen einer passwortgeschützten Speicheradresse der ersten Datenbank, unter der das erste virtuelle Dokument auslesbar ist,
- Auslesen des ersten virtuellen Dokuments,
- Anzeigen des ersten virtuellen Dokuments auf dem ersten Display des ersten Computersystems,
- Empfangen eines eindeutigen zweiten Identifikators des mobilen zweiten Computersystems,
- Berechnen eines dritten Identifikators unter Verwendung des empfangenen zweiten Identifikators und eines Hashwerts des ersten virtuellen Dokuments,
- Identifizieren des Datenbankeintrags der zweiten Datenbank, in welchem der erste Identifikator gespeichert ist,
- Vergleichen des berechneten dritten Identifikators mit dem in dem identifizierten Datenbankeintrag gespeicherten ersten Identifikator,
- bei Übereinstimmung des berechneten dritten Identifikators mit dem gespeicherten ersten Identifikatoren, Bestätigen der Gültigkeit des virtuellen Dokuments.

Ausführungsformen können den Vorteil haben, dass die passwortgeschützte Speicheradresse der ersten Datenbank, unter der das erste virtuelle Dokument auslesbar ist, an sich keine personenbezogenen Daten umfasst. Mithin kann diese öffentlich bekannt sein, ohne dadurch sensible personenbezogene Daten des Nutzers des mobilen zweiten Computersystems preiszugeben. Weder an die Sicherung noch an die Übertragung der Speicheradresse sind hohe Sicherheitsanforderungen zu stellen. Dies erleichtert insbesondere eine Übertragung der Speicheradresse per Nahfeldkommunikation, beispielsweise mittels RFID, Bluetooth® oder WLAN. Beispielsweise kann die Kommunikation drahtlos entsprechend der Norm ISO 14443 mit einer Frequenz von 13,56 MHz erfolgen. Alternativ kann die Kommunikation auch entsprechend dem Bluetooth®-Standard 4 oder 5 erfolgen. Beispielsweise kann die Speicheradresse also Beacon in festen Zeitintervallen an die Umgebung gesendet werden. Bei der Speicheradresse kann es sich beispielweise um eine URI ("Uniform Resource Identifier"/ einheitlicher Bezeichner für Ressourcen) oder URL ("Uniform Resource Locator"/einheitlicher Ressourcenzeiger) handeln. Bei dem dritten Computersystem handelt es sich beispielsweise um ein in eine Cloud-Umgebung eingebettetes Computersystem.

Durch die Passwortsicherung wird sichergestellt, dass, selbst wenn die Speicheradresse allgemein zugänglich ist und insbesondere unverschlüsselt kabellos übertragen wird, der Zugriff auf das virtuelle Dokument und damit auf die von dem Dokument umfassten Daten auf dazu autorisierte Computersysteme bzw. Personen beschränkt wird. Nur wer über ein gültiges Passwort verfügt kann das virtuelle Dokument auch tatsächlich auslesen.
Das ausgelesene virtuelle Dokument wird auf dem Display des ersten Computersystems angezeigt und die von dem virtuellen Dokument umfasst Daten können von einem Nutzer des ersten Computersystems in Augenschein genommen werden. Beispielsweise umfasst das virtuelle Dokument Identifikationsmerkmale des Dokumenteninhabers, wie beispielsweise ein Lichtbild und/oder Angaben zu Körpergröße, Augenfarbe und Alter. Anhand dieser Merkmale kann der Nutzer des ersten Computersystems prüfen, ob der Nutzer des mobilen zweiten Computersystems tatsächlich auch der Inhaber des virtuellen Dokuments ist. Im Falle eines Ausweisdokuments kann so der Nutzer des mobilen zweiten Computersystems identifiziert werden.

Beispielsweise kann es sich bei dem virtuellen Dokument um einen Führerschein handeln und bei dem ersten Computersystem um ein tragbares Mobilfunkgerät eines Polizisten, der eine Verkehrskontrolle durchführt, oder einen stationären Personalcomputer einer Autoverleihung, bei der der Führerscheininhaber ein Fahrzeug ausleihen möchte. Ebenso könnte es sich bei dem virtuellen Dokument beispielsweise um einen Personalausweis handeln und bei dem ersten Computersystem um ein tragbares Mobilfunkgerät oder einen stationären Personalcomputer eines Polizisten, der eine Personenkontrolle durchführt, oder einen stationären Personalcomputer einer Rezeption eines Hotels, in welchem der Ausweisinhaber ein Zimmer buchen möchte.

Eine Authentifizierung mit einem Ausweisdokument in Form eines physischen Dokuments mit fest zugeordnetem Dokumentenkörper, welcher eine Mehrzahl von Sicherheitsmerkmale sowie ein Lichtbild des Dokumenteninhaber umfasst, stellt im Grunde eine Zwei-Faktor-Authentifizierung dar. Eine solche Zwei-Faktor-Authentifizierung dient der Authentifizierung eines Nutzers mittels der Kombination zweier Faktoren. Diese Faktoren können beispielsweise gegeben sein in Form eines Gegenstandes, der sich im Besitz des Nutzers befindet, und eines Merkmals, welches untrennbar mit dem Nutzer verbunden ist. Im Falle des zuvor genannten Ausweisdokuments erfolgt die Authentifizierung durch den Nachweis des Besitzes des entsprechenden Ausweisdokuments sowie durch das Gesicht des Nutzers, welches für eine erfolgreiche Authentifizierung mit dem Lichtbild des Inhabers des Ausweisdokuments übereinstimmen muss.

Ausführungsformen können den Vorteil haben, dass sie ebenfalls eine Zwei-Faktor-Authentifizierung ermöglichen. Neben einer Übereinstimmung des Aussehens des Nutzers des mobilen zweiten Computersystems, beispielsweise eines Smartphones, mit einem von dem virtuellen Dokument umfassten Lichtbild des Dokumenteninhabers, muss es sich bei dem mobilen zweiten Computersystem um ein dem virtuellen Dokument zugeordnetes Computersystem handeln. Diese Zuordnung wird durch den Eintrag in die kryptographisch gesicherte zweite Datenbank eingerichtet und nachgewiesen.

Bei dem mobilen zweiten Computersystem kann es sich beispielsweise um einen Laptop- oder Palmtop-Computer, einen Personal Digital Assistant, ein mobiles Telekommunikationsgerät, insbesondere ein Smartphone, oder dergleichen handeln. Nach weiteren Ausführungsformen kann es sich bei dem mobilen zweiten Computersystem auch um ein Computersystem eines persönlichen Fortbewegungsmittels eines Nutzers handeln, wie etwa den Bordcomputer eines Autos.

Ferner kann es sich bei dem mobilen zweiten Computersystem beispielsweise auch um sog. "wearables" bzw. "wearable computers", d.h. Computersysteme handeln, welche während der Anwendung am Körper des Nutzers angeordnet sind. Beispiele für Wearables sind Smartwatches, d.h. Uhren mit Computerfunktionalität und - konnektivität, Activity Tracker, d.h. Gerät zur Aufzeichnung und Versendung fitness- und/oder gesundheitsrelevanter Daten, Smartglasses, d.h. Brillen, deren Innenseiten als Bildschirm dienen, oder Kleidungsstücke, in die elektronische Hilfsmittel zur Kommunikation eingearbeitet sind.

Bei dem ersten Computersystem kann es sich, falls dieses ebenfalls als mobiles Computersystem konfiguriert ist, ebenfalls um ein Computersystem der oben aufgelisteten Arten handeln, sofern diese ein Display umfassen. Bei dem ersten Computersystem kann es sich darüber hinaus auch um ein stationäres Computersystem handeln, wie etwa einen Personalcomputer.

Durch die Paarung mittels Eintrag in die kryptographisch gesicherte zweite Datenbank können zum einen mehrere virtuelle Dokumente mit demselben mobilen zweiten Computersystem gepaart werden. Somit werden nicht für jedes Dokument ein eigenständiger physischer Dokumentenkörper benötigt. Beispielsweise wird sowohl ein virtueller Personalausweis als auch ein virtueller Führerschein mit demselben Smartphone gepaart. Ein Nutzer muss somit nur sein Smartphone mit sich führen, um sowohl seinen Personalausweis als auch seinen Führerschein zur Verfügung zu haben.

Ferner kann auch ein virtuelles Dokument mit mehreren Geräten gepaart werden. Beispielsweise kann ein Nutzer seinen Führerschein sowohl mit seinem Smartphone als auch mit dem Bordcomputer eines oder mehrerer von ihm benutzter Autos paaren. So hat er den Führerschein stets verfügbar, wenn er mit einem der entsprechenden Autos unterwegs ist. Durch das Smartphone hat er seinen Führerschein zudem verfügbar, wenn er mit einem fremden Auto oder einem anderen Fahrzeug, wie etwa einem Motorrad, unterwegs ist.

Durch Verwendung eines eindeutigen Identifikators des zweiten Computersystems und des Hashwerts des virtuellen Dokuments kann die Paarung zwischen dem zweiten Computersystem und dem virtuellen Dokument eindeutig bestimmt werden. Bei dem eindeutigen Identifikator des mobilen zweiten Computersystems handelt es sich beispielsweise um eine IMEI ("International Mobile Station Equipment Identity"), einen ICCID ("Integrated Circuit Card Identifier"), einen MEID ("Mobile Equipment Identifier"), eine Android-Geräte-ID, eine Seriennummer, WLAN MAC-Adresse oder eine Bluetooth®-Adresse.

Ein Computer bzw. Computersystem kann eine Schnittstelle zur Verbindung mit einem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einer "Datenbank" wird hier allgemein eine Zusammenstellung von Daten in Form von Datenbankeinträgen gemäß einer festgelegten Organisationsstruktur der Datenbank verstanden. Eine Datenbank kann zudem ein Verwaltungsprogramm zum Verwalten der Datenbank umfassen. Unter einer kryptographisch gesicherten Datenbank wird eine Datenbank verstanden, deren Einträge kryptographisch gesichert sind. Beispielsweise umfasst die Datenbank verschlüsselte und/oder signierte Daten. Unter einer kryptographisch gesicherten Datenbank wird hier insbesondere eine Blockchain verstanden.

Unter einem "Zertifikat" wird hier ein digitales Zertifikat verstanden, welches auch als Public-Key-Zertifikat bezeichnet wird. Im Folgenden werden "digitale" Objekte auch als "virtuelle" Objekte bezeichnet, d.h. Datenkonstrukte zur elektronischen Datenverarbeitung. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit virtueller Dokumente sicherstellen und nachweisen, dass diese von einer bestimmten juristischen Person stammen.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk handeln, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann das Netzwerk auch ein Mobilfunknetz sein.

Eine Kommunikation kann über einen optischen Kanal zwischen zwei optischen Schnittstellen erfolgen. Bei den beiden optischen Schnittstellen kann es sich beispielsweise um ein Display zum Anzeigen bzw. Senden optischer Daten und eine Digitalkamera zur Aufnahme bzw. zum Empfang der optischen Daten handeln.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "virtuellen" Dokument wird ein Datenkonstrukt zur elektronischen Datenverarbeitung verstanden, welches dieselben Daten wie ein zuvor definiertes Dokument, jedoch keinen fest zugeordneten physischen Dokumentenkörper umfasst. Insbesondere ist die Gültigkeit eines solchen Dokuments unabhängig von dem Vorhandensein eines fest zugeordneten Dokumentenkörpers. Bei einem "virtuellen" Dokument kann es sich um eine elektronische Datei eines beliebigen Dateiformats handeln, insbesondere eine nicht ausführbare Text- oder Tabellendatei.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Die Verwendung von Ordinalzahlen wie erstes, zweites, drittes etc. dient hier, soweit sich aus dem konkreten Zusammenhang nicht eindeutig etwas Anderes ergibt, allein der Unterscheidung voneinander verschiedener Elemente und soll keine bestimmte Reihenfolge implizieren.

Nach Ausführungsformen ist ein Master-Passwort zum Auslesen von virtuellen Dokumenten aus der ersten Datenbank in einem geschützten Speicherbereich eines Speichers des ersten Computersystems gespeichert. Das Auslesen des ersten virtuellen Dokuments erfolgt unter Verwendung des Master-Passworts. Ausführungsformen können den Vorteil haben, dass beispielsweise der Polizei zugeordnete erste Computersysteme dazu konfiguriert sind, virtuelle Ausweisdokumente, wie etwa virtuelle Personalausweise, virtuelle Reisepässe oder virtuelle Aufenthaltstitel, oder virtuelle Führerscheine jederzeit auslesen zu können. Hierzu sendet das mobile zweite Computersystem beispielsweise fortwährend die passwortgeschützte Speicheradresse in vordefinierten Zeitintervallen. Ein Polizist mit einem entsprechenden ersten Computersystem kann bei einer Personen- oder Verkehrskontrolle somit bereits frühzeitig Einsicht in das virtuelle Ausweisdokument einer zu kontrollierenden Person erhalten. Dies kann den Vorteil haben, dass die Kontrolle mit einem ausreichenden Sicherheitsabstand, insbesondere außerhalb der Reichweite der zu kontrollierenden Person erfolgen kann.

Nach Ausführungsformen umfasst das Verfahren ferner: Empfangen eines Passworts zum Auslesen des ersten virtuellen Dokuments, wobei das Auslesen des ersten virtuellen Dokuments unter Verwendung des empfangenen Passworts erfolgt. Ausführungsformen können den Vorteil haben, dass der Nutzer des mobilen zweiten Computersystems, bei dem es sich im Allgemeinen zugleich um den Inhaber des virtuellen Dokuments handelt, durch eine Kontrolle der Verteilung des oder der Passwörter eine effektive Zugriffkontrolle über das virtuelle Dokument ausüben kann.

Nach Ausführungsformen handelt es sich bei dem empfangenen Passwort um ein Einmalpasswort, mit welchem das virtuelle Dokument unter der passwortgeschützten Speicheradresse einmal ausgelesen werden kann. Ausführungsformen können den Vorteil haben, dass ein Missbrauch eines einmal gewährten Zugriffsrechts auf das virtuelle Dokument effizient unterbunden werden kann. So wird insbesondere unterbunden, dass unberechtigte Dritte das virtuelle Dokument auslesen können, falls ihnen beispielsweise der Besitzer des ersten Computersystems das Passwort zugänglich macht oder sie sich anderweitig Zugriff zu dem Passwort verschaffen. Die Verfügungshoheit über das virtuelle Dokument liegt somit beim Nutzer des mobilen zweiten Computersystems. Zudem kann so die Sicherheit des virtuellen Dokuments erhöht werden.

Nach Ausführungsformen umfasst das Empfangen des Passworts: Scannen des Passworts, welches auf einem zweiten Display des mobilen zweiten Computersystems angezeigt wird, mit einem Scanner des ersten Computersystems. Ausführungsformen können den Vorteil haben, dass die Übertragung des Passworts über einen optischen Kanal erfolgt, der durch das zweite Display und den Scanner gebildet wird. Durch eine entsprechende Ausrichtung von Display und Scanner und gegebenenfalls zusätzlichen Abschirmmaßnahmen kann eine auf einen bestimmten Raumwinkel gerichtet Übertragung implementiert werden, welche besser gegenüber Ausspähversuchen Dritter gesichert werden kann als beispielsweise eine ungerichtete Übertragung mittels RFID oder Bluetooth®.

Nach alternativen Ausführungsformen kann das angezeigte Passwort von einem Nutzer des ersten Computersystems auch abgetippt oder diesem von dem Nutzer des mobilen zweiten Computersystems vorgelesen werden.

Nach Ausführungsformen handelt es sich bei dem Scanner um eine Digitalkamera. Ausführungsformen können den Vorteil haben, dass es sich bei den für den optischen Übertragungskanal verwendeten Schnittstellen, d.h. Display und Digitalkamera, um Standardhardware handelt, welche mittlerweile beispielsweise in allen Smartphones verfügbar ist.

Nach Ausführungsformen wird das empfangene Passwort auf dem zweiten Display als graphischer Code angezeigt. Nach Ausführungsformen handelt es sich bei dem graphischen Code beispielsweise um einen QR-Code. Ausführungsformen können den Vorteil haben, dass sie eine sichere, d.h. insbesondere fehlerfreie, und effiziente Übertragung des Passworts ermöglichen. Das Passwort wird hierzu vor dem Senden von dem mobilen zweiten Computersystem graphisch kodiert und von dem empfangenden ersten Computersystem nach dem Empfang wieder dekodiert.

Nach Ausführungsformen ist das empfangene Passwort mit einem öffentlichen kryptographischen Schlüssel eines dem ersten Computersystem zugeordneten asymmetrischen Schlüsselpaar verschlüsselt. Das Verfahren umfasst ferner: Entschlüsseln des empfangenen Passworts unter Verwendung eines privaten kryptographischen Schlüssels des asymmetrischen Schlüsselpaars. Ausführungsformen können den Vorteil haben, dass sie eine sichere Übertragung des Passworts von dem mobilen zweiten Computersystem an das erste Computersystem gewährleisten. Selbst wenn das übertragene Passwort abgefangen oder abgehört wird, kann ein unbefugter Dritter, der keinen Zugriff auf den privaten kryptographischen Schlüssel besitzt, das Passwort nicht verwenden.

Nach Ausführungsformen umfasst das Verfahren ferner: Empfangen einer Speicher-ID der zweiten Datenbank, wobei die Speicher-ID den Eintrag der zweiten Datenbank identifiziert, in welchem der erste Identifikator gespeichert ist. Das Identifizieren des Datenbankeintrags der zweiten Datenbank, in welchem der erste Identifikator gespeichert ist, erfolgt unter Verwendung der Speicher-ID. Ausführungsformen können den Vorteil haben, dass sie ein einfaches Identifizieren des Eintrags der zweiten Datenbank ermöglichen, welche den ersten Identifikator umfasst.

Nach Ausführungsformen handelt es sich bei der kryptographisch gesicherten zweiten Datenbank um eine Blockchain und der erste Identifikator ist als Transaktion in einem Block der Blockchain gespeichert.

Unter einer "Blockchain" wird hier und im Folgenden eine geordnete Datenstruktur verstanden, wobei jeder Block der Blockchain durch einen Hash-Wert identifiziert wird und einen Vorgängerblock in der Blockchain referenziert, für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die Blockchain besteht aus einer Reihe von Datenblöcken, in denen jeweils eine oder mehrere Transaktionen zusammengefasst und mit einer Prüfsumme in Form eines Hashwerts versehen sind. Neue Blöcke der Blockchain werden in einem üblicher Weise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Haschwerten, des vorangehenden Blocks im jeweils nachfolgenden Block ein hohes Maß an Sicherheit gegenüber nachträglichen Manipulationen bietet. Bei einer Blockchain werden die Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme im Header des Blocks vermerkt. Das Verketten der Blöcke kann dann unter Verwendung dieser Root-Hashwerte. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Zudem kann durch eine Anpassung der notwendigen Rechenintensität für die Erstellung jeweils neuer Blöcke die Sicherheit zusätzlich erhöht werden. Die für die Erstellung neuer Blöcke notwenige Rechenintensität lässt sich über Anforderungen an den Hashwert des zu erstellenden neuen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen neuen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung neuer Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1 )·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchainservern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Werden gültige Blöcke durch ein rechenintensive Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählte Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc, 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Nach Ausführungsformen handelt es sich bei der Speicher-ID um eine Transaktions-ID der Transaktion, welche den ersten Identifikator umfasst. Ausführungsformen können den Vorteil haben, dass sie eine einfache Identifizierung der Transaktion ermöglichen, welche den ersten Identifikator umfasst.

Nach Ausführungsformen ist eine Kopie der Blockchain in dem Speicher des ersten Computersystems gespeichert ist. Ausführungsformen können den Vorteil haben, dass die Blockchain jederzeit verfügbar ist.

Eine Blockchain kann darauf ausgelegt sein als dezentralen Datenbank in einem dezentralen Netzwerk implementiert zu werden, wobei sie redundant und dezentral auf allen Knoten des entsprechenden Netzwerks gespeichert wird. Beispielsweise handelt es sich bei dem zweiten elektronischen Gerät um ein solchen Knoten eines dezentralen Netzwerks. Wird die Verbindung eines Knotens zum Rest des Netzwerks unterbrochen, so steht diesem nach wie vor die vollständige Blockchain zur Verfügung. Selbst wenn die Unterbrechung längere Zeit andauern sollte, so steht dem Knoten dennoch die vollständige Blockchain bis zu der Unterbrechung zur Verfügung und allenfalls neuste Einträge, welche nach diesem Zeitpunkt erfolgt sind fehlen. Somit kann die Blockchain auch im Offline-Betrieb einen effizienten Zugriff auf die in ihr enthaltenen Daten sicherstellen. Ist die Blockchain auf dem ersten Computersystem gespeichert, kann durch ein regelmäßiges Update der Blockchain im Speicher des ersten Computersystems zudem sichergestellt werden, dass die Blockchain bei einer Unterbrechung der Netzwerkverbindung zwischen den Updates auf einem ausreichend aktuellen Stand ist.

Nach Ausführungsformen ist die Kommunikationsschnittstelle dazu konfiguriert, mit dem mobilen zweiten Computersystem unter Verwendung des Bluetooth®-Standards zu kommunizieren. Ausführungsformen können den Vorteil haben, dass eine effiziente kontaktlose Kommunikation zwischen dem mobilen zweiten Computersystem und dem ersten Computersystem ermöglicht wird, wobei insbesondere auch das erste Computersystem als mobiles Computersystem konfiguriert sein kann. Beispielsweise erfolgt die Kommunikation unter Verwendung des Bluetooth®-Standard 4 oder 5.

Nach Ausführungsformen handelt es sich bei dem zweiten Identifikator um die Bluetooth®-Adresse des zweiten Computersystems. Ausführungsformen können den Vorteil haben, dass bei einer Kommunikation zwischen dem mobilen zweiten Computersystem und dem ersten Computersystem unter Verwendung des Bluetooth®-Standards die Bluetooth®-Adresse einen in die Kommunikation einfach einzubindenden eindeutigen zweiten Identifikator bereitstellt.

Nach Ausführungsformen ist der in der zweiten Datenbank gespeicherte erste Identifikator mit einem privaten kryptographischen Schlüssel eines einem ID-Provider zugeordneten asymmetrischen Schlüsselpaars signiert. Das Verfahren umfasst ferner: Überprüfen der Signatur des in dem identifizierten Datenbankeintrag gespeicherten ersten Identifikator durch das erste Computersystem unter Verwendung eines öffentlichen kryptographischen Schlüssels des dem ID-Provider zugeordneten asymmetrischen Schlüsselpaars. Ausführungsformen können den Vorteil haben, dass die Authentizität des Datenbankeintrags gesichert ist. Anhand der Signatur kann geprüft werden, dass der erste Identifikator, welcher die Grundlage für die Bestätigung der Gültigkeit des virtuellen Dokuments bildet, von einer dazu berechtigten und vertrauenswürdigen Instanz eingetragen wurde. Somit lässt sich nicht nur die Integrität des ersten Identifikator, sondern darüber hinaus auch sein Ursprung belegen. Hierdurch kann die Sicherheit noch weiter erhöht werde. Darüber hinaus kann die Gültigkeit des öffentlichen kryptographischen Schlüssels des ID-Providers mittels einer Dokumenten-PKI überprüft werden.

Nach Ausführungsformen umfasst die zweite Datenbank zusätzlich den öffentlichen kryptographischen Schlüssel des ID-Providers. Ausführungsformen können den Vorteil haben, dass ein einfacher Zugriff auf den öffentlichen kryptographischen Schlüssel direkt im Zuge der Datenbankabfrage ermöglicht wird. Handelt es sich bei der Datenbank zudem um eine Datenbank mit einer Blockchain-Struktur, wobei der öffentliche kryptographische Schlüssel des ID-Providers in einer der Transaktionen gespeichert ist, so wird der öffentliche kryptographische Schlüssel durch die mittels der Prüfsummenspeicherung gesicherten Kettenstruktur der Blockchain vor Manipulationen geschützt.

Nach Ausführungsformen umfasst der Datenbankeintrag der zweiten Datenbank zusätzlich den öffentlichen kryptographischen Schlüssel des ID-Providers. Ausführungsformen können den Vorteil haben, dass sie einen einfachen Zugriff auf den öffentlichen kryptographischen Schlüssel ermöglichen.

Nach Ausführungsformen handelt es sich bei dem ersten Computersystem und/oder dem mobilen zweiten Computersystem um ein Mobilfunkgerät, insbesondere ein Smartphone. Ausführungsformen können den Vorteil haben, dass das Standardhardware zum implementieren des Verfahrens verwendet werden kann. Insbesondere können Ausführungsformen den Vorteil haben, dass Smartphones die für eine optische Übertragung notwendige Hardware, d.h. Display und Digitalkamera, standardmäßig umfassen.

Nach Ausführungsformen handelt es sich bei dem ersten virtuellen Dokument um ein virtuelles Ausweisdokument. Ausführungsformen können den Vorteil haben, dass sie ein sicheres und effizientes Verfahren zum Authentifizieren des Nutzers des mobilen Computersystems anhand des virtuellen Dokuments ermöglichen.

Nach Ausführungsformen umfasst der Datenbankeintrag der zweiten Datenbank, in welchem der erste Identifikator gespeichert ist, ein Ablaufdatum, welches ein Ende der Gültigkeit der ersten Paarung festlegt. Ausführungsformen können den Vorteil haben, dass ein einmal in die zweite Datenbank eingetragener erste Identifikator, d.h. eine einmal registrierte Paarung zwischen dem mobilen zweiten Computersystem und dem virtuellen Dokument, seine Gültigkeit nicht bis in alle Ewigkeit beibehält, da Einträge in eine Blockchain weder gelöscht noch geändert werden können. Am Ende der Gültigkeit muss die Paarung erneuert werden, d.h. der Identifikator mit einem neuen Ablaufdatum neu in die Blockchain eingetragen werden. Insbesondere kann durch die Anforderung einer Neueintragung des ersten Identifikators in regelmäßigen Abständen sichergestellt werden, dass die Paarung zwischen dem mobilen zweiten Computersystem und dem virtuellen Dokument nicht zwischenzeitlich aufgehoben wurde.

Nach Ausführungsformen umfasst das Verfahren ferner:
- Prüfen, ob die zweite Datenbank zusätzlich einen Sperreintrag umfasst, welcher den ersten Identifikator als gesperrt kennzeichnet,
- Zurückweisen des ersten virtuellen Dokuments als ungültig, falls ein Sperreintrag aufgefunden wird.

Ausführungsformen können den Vorteil haben, dass sie einen effizienten Sperrmechanismus bereitstellen. Hierbei wird in der zweiten Datenbank beispielsweise nach allen Einträgen mit dem ersten Identifikator gesucht.

Nach Ausführungsformen wird das ausgelesene erste virtuelle Dokument nach der Prüfung aus dem Speicher des ersten Computersystems gelöscht. Nach Ausführungsformen wird das erste virtuelle Dokument nicht dauerhaft auf dem ersten Computersystem gespeichert, beispielsweise nur in flüchtigen elektronischen Speicher. Ausführungsformen können den Vorteil haben, dass das virtuelle Dokument allein in der ersten Datenbank dauerhaft gespeichert ist und der Nutzer des mobilen zweiten Computersystems somit die Verfügungshoheit über seine persönlichen Daten behält.

Ausführungsformen umfassen ferner ein erstes Computersystem zum Prüfen der Gültigkeit eines ersten virtuellen Dokuments, wobei das erste virtuelle Dokument mittels eines mobilen zweiten Computersystems für das erste Computersystem bereitgestellt wird. Das erste virtuelle Dokument ist in einer ersten Datenbank eines dritten Computersystems gespeichert, wobei in der ersten Datenbank eine Mehrzahl von virtuellen Dokumenten gespeichert ist. Das erste Computersystem umfasst eine erste Kommunikationsschnittstelle zur kontaktlosen Kommunikation mit dem mobilen zweiten Computersystem sowie zur Kommunikation mit dem dritten Computersystem über ein Netzwerk. Ferner umfasst das erste Computersystem ein erstes Display zum Anzeigen des ersten virtuellen Dokuments. Das erste Computersystem besitzt Zugriff auf eine kryptographisch gesicherte zweite Datenbank, welche Identifikatoren für Paarungen aus Computersystemen und den virtuellen Dokumenten der ersten Datenbank umfasst. Die Identifikatoren der zweiten Datenbank umfassen einen ersten Identifikator einer ersten Paarung aus dem mobilen zweiten Computersystem und dem ersten virtuellen Dokument. Das erste Computersystem ist dazu konfiguriert, ein Verfahren zum Bereitstellen und Prüfen der Gültigkeit des ersten virtuellen Dokuments nach einer der zuvor beschriebenen Ausführungsformen auszuführen.

Im Weiteren werden Ausführungsformen der Erfindung mit Bezugnahme auf die Zeichnungen näher erläutert. Es zeigen:
- Figur 1: ein Blockdiagramm einer Ausführungsform eines exemplarischen Systems zum Bereitstellen und Prüfen der Gültigkeit eines virtuellen Dokuments,
- Figur 2: ein Flussdiagramm einer Ausführungsform eines ersten exemplarischen Verfahrens zum Bereitstellen und Prüfen der Gültigkeit eines virtuellen Dokuments, und
- Figur 3: ein Flussdiagramm einer Ausführungsform eines ersten exemplarischen Verfahrens zum Bereitstellen und Prüfen der Gültigkeit eines virtuellen Dokuments.

Elemente der nachfolgenden Ausführungsformen, die einander entsprechen, werden mit denselben Bezugszeichen gekennzeichnet.

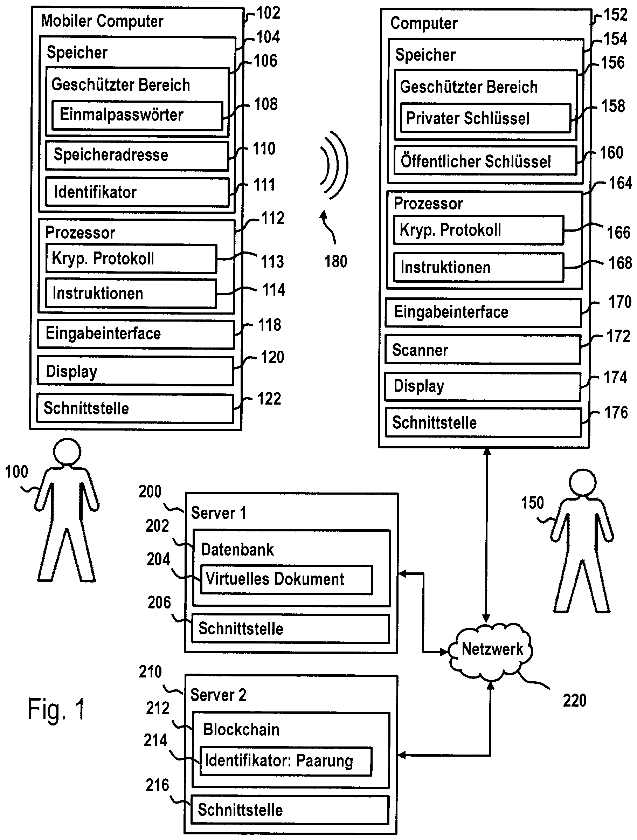

Die Figur 1 zeigt ein Blockdiagramm einer Ausführungsform eines exemplarischen Systems, welches ein mobiles Computersystem 102, ein Computersystem 152 sowie einen ersten und ein zweiten Server 202, 212 umfasst. Bei dem mobilen Computersystem 102 des Nutzer 100 handelt es sich beispielsweise um ein tragbares Computersystem, wie etwa ein Smartphone. Das Smartphone 102 umfasst einen Speicher 104 mit einem geschützten Speicherbereich 106 auf den ein Zugriff nur über einen Prozessor 112 des Smartphones 102 möglich ist. In dem geschützten Speicherbereich 106 ist zumindest ein Einmalpasswort 108 gespeichert. Das Einmalpasswort 108 erlaubt einen einmaligen Zugriff auf ein unter einer passwortgeschützten Speicheradresse gespeicherte virtuelle Dokument 204. Das Einmalpasswort 108 kann dem Smartphone 102 beispielsweise in Form einer TAN-Liste von dem ersten Server 200 bzw. einer für den Betrieb des ersten Server 200 verantwortlichen Instanz zur Verfügung gestellt worden sein. Zudem ist in dem Speicher 104 die Speicheradresse 110 gespeichert, unter der das virtuelle Dokument 204 ausgelesen werden kann. Bei der Speicheradresse 110 handelt es sich beispielsweise um eine URI oder URL. Ferner umfasst der Speicher 104 einen eindeutigen Identifikator 111 des Smartphones 102, bei welchem es sich beispielsweise um eine Bluetooth®-Adresse oder IMEI des Smartphones 102 handelt.

Ferner umfasst das Smartphone 102 einen Prozessor 112 mit Instruktionen 114 zum Ausführen des Verfahrens zum Bereitstellen und Prüfen der Gültigkeit des virtuellen Dokuments 204. Die Instruktionen 114 steuern insbesondere das Senden der Speicheradresse 110. Ferner steuern die Instruktionen 114 das Bereitstellen des Einmalpassworts 108 für das Computersystem 152. Beispielsweise wird das Einmalpasswort 108 mit einem von dem Computersystem 152 bereitgestellten öffentlichen Schlüssel 160 verschlüsselt. Hierzu kann das Smartphone 102 kryptographische Programminstruktionen 113 umfassen, welche ein kryptographischen Protokoll implementieren. Das kryptographische Protokoll ist beispielsweise dazu konfiguriert das Einmalpasswort 108 mit dem öffentlichen kryptographischen Schlüssel 160 zu verschlüsseln. Ferner kann das Einmalpasswort 108, verschlüsselt oder unverschlüsselt, für eine Anzeige auf einem Display 120 des Smartphones 102 graphisch kodiert werden. Beispielsweise sind die Instruktionen 114 zur Kodierung des Einmalpassworts 108 konfiguriert.

Schließlich umfasst das Smartphone 102 noch ein Eingabeinterface 118, welches beispielsweise in das Display 120 integriert sein kann, falls dieses als Touchscreen konfiguriert ist. Das Eingabeinterface 118 dient zur Steuerung des Smartphone 102 durch den Nutzer 100. Das Display 120 ist beispielweise zur Anzeige eines graphischen Codes, wie etwa eines QR-Codes geeignet. Beispielsweise handelt es sich bei dem Display 120 um ein bistabiles Display, E-Paper, LCD-Display ("Liquid Crystal Display"), OLED-Display ("Organic Light-Emitting Diode display"), oder ein AMOLED-Display ("Active Matrix Organic Light-Emitting Diode display"). Zudem ist in das Smartphone 102 eine Schnittstelle 122 zur kontaktlosen Kommunikation mit einer Schnittstelle 176 des Computersystem 152 integriert. Beispielsweise handelt es sich bei der Schnittstelle 122 um eine Bluetooth®- oder RFID-Schnittstelle, welche die Speicheradresse 110 per Funksignal 180 kontaktlos an den Computersystem 152 überträgt.

Bei dem Computersystem 152 des Nutzer 150 handelt es sich beispielsweise ebenfalls um ein tragbares Computersystem, wie etwa ein Smartphone. Ebenso könnte es sich bei dem Computersystem 152 aber auch um ein speziell konfiguriertes Verifikationsgerät oder ein stationäres Computersystem handeln. Das Computersystem 152 umfasst einen Speicher 154 mit einem geschützten Speicherbereich 156 auf den ein Zugriff nur über einen Prozessor 164 des Computersystems 152 möglich ist. In dem geschützten Speicherbereich 156 ist ein privater Schlüssel 158 eines dem Computersystem 152 zugeordneten asymmetrischen Schlüsselpaars gespeichert. Zudem ist in dem Speicher 154 ein dem privaten Schlüssel 158 zugeordneter öffentlicher Schlüssel 160 gespeichert.

Ferner umfasst das Computersystem 152 einen Prozessor 164 mit kryptographischen Programminstruktionen 166, welche ein kryptographischen Protokoll implementieren. Das kryptographische Protokoll ist beispielsweise dazu konfiguriert das mit dem öffentlichen kryptographischen Schlüssel 160 verschlüsselte Einmalpasswort 108 mit dem privaten Schlüssel 158 zu entschlüsseln. Ferner können die kryptographischen Programminstruktionen 166 beispielsweise die Kommunikation zwischen dem Computersystem 152 und dem ersten Server 200 zur Übertragung des virtuellen Dokuments 204 über das Netzwerk 220 kryptographisch schützen. Zudem führt der Prozessor Programminstruktionen 168 aus, welche beispielsweise um Auslesen und Prüfen der Gültigkeit des virtuellen Dokuments 204 konfiguriert sind. Beispielsweise sind sie zur Dekodierung einer graphischen Kodierung des Einmalpassworts 108 konfiguriert.

Weiterhin umfasst das Computersystem 152 ein Display 174 zum Anzeigen des virtuellen Dokuments 204. Ferner umfasst das Computersystem 152 noch ein Eingabeinterface 170, welches beispielsweise in das Display 174 integriert sein kann, falls dieses als Touchscreen konfiguriert ist. Das Eingabeinterface 170 dient zur Steuerung des Computersystems 152 durch den Nutzer 150. Bei dem Display 174 handelt es sich beispielweise um ein bistabiles Display, E-Paper, LCD-Display ("Liquid Crystal Display"), OLED-Display ("Organic Light-Emitting Diode display"), oder ein AMOLED-Display ("Active Matrix Organic Light-Emitting Diode display"). Zudem kann das Computersystem 152 mit einem Scanner 172, beispielsweise in Form einer Digitalkamera, ausgestattet sein. Schließlich umfasst das Computersystems 152 noch eine Schnittstelle 176, welche zur kontaktlosen Kommunikation mittels eine Funksignals 180 mit dem mobilen Computersystem 102 konfiguriert ist. Die kann die Schnittstelle 176 zur Kommunikation mit den beiden Servern 200, 210 über das Netzwerk 220 konfiguriert sein. Beispielsweise handelt es sich bei dem Netzwerk 220 um ein Intranet oder das Internet. Die Kommunikation kann dabei kabellos und/oder über Netzwerkkabel erfolgen.

Mittels des Displays 120 des Smartphones 102 und des Scanners 172 des Computersystems 152 kann beispielsweise ein unidirektionaler optischer Kommunikationskanal zur sicheren Übertragung des Einmalpassworts 108 von dem Smartphone 102 auf das Computersystem 152 eingerichtet werden.

Der erste Server 200 umfasst die Datenbank 202 und/oder stellt das in der Datenbank 202 gespeicherte virtuellen Dokumente 204 unter einer über das Netzwerk 220 aufrufbaren passwortgeschützten Speicheradresse bereit. Für die Kommunikation über das Netzwerk 220 weist der zweite Server 200 eine entsprechende Schnittstelle 206 auf. Beispielsweise kann die entsprechende Speicheradresse mittels eines allgemeinen Browsers, wie etwa Microsoft Internet Explorer®, Safari®, Google Chrome®, Firefox®, oder einer speziell hierfür konfigurierten Applikation aufgerufen werden. Der Server 200 steuert den Zugriff auf das virtuellen Dokumente 204 so, dass es nur bei Eingabe bzw. Übermittlung eines gültigen Passworts ausgelesen werden kann. Insbesondere stellt der Server 200 im Falle von Einmalpasswörtern sicher, dass eine wiederholte Eingabe eines solchen Einmalpassworts keinen erneuten Zugriff auf das virtuelle Dokument 204 erlaubt. Für die Kommunikation über das Netzwerk 220 weist der erste Server 200 eine entsprechende Schnittstelle 206 auf. Nach Ausführungsformen handelt es sich bei dem Computersystem 152 um ein Computersystem welches einer Instanz mit hoheitlichen Befugnissen, wie etwa der Polizei, zugeordnet ist und in dem geschützten Speicherbereich 156 zusätzlich ein Master-Passwort umfasst. In diesem Fall steuert der Server 200 den Zugriff auf das virtuellen Dokumente 204 beispielsweise so, dass das virtuellen Dokumente 204 bei Eingabe bzw. Übermittlung des gültigen Master-Passworts jederzeit, d.h. insbesondere auch wiederholt, ausgelesen werden kann.

Der zweite Server 210 umfasst und verwaltet eine kryptographisch gesicherte Datenbank in Form einer Blockchain 212, bei welcher es sich beispielsweise um eine beliebige öffentlich zugängliche Blockchain handeln kann. In den Blöcken der Blockchain 212 sind Identifikatoren von Paarungen zwischen Computersystemen und virtuellen Dokumenten dauerhaft und revisionssicher gespeichert. Die Identifikatoren lassen sich aus einem eindeutigen Identifikator des entsprechenden Computersystems sowie dem Hashwert des entsprechenden virtuellen Dokuments berechnen. Die Blockchain 212 umfasst den Identifikator 214 der Paarung aus dem mobilen Computersystem 102 und dem virtuellen Dokument 204. Für die Kommunikation über das Netzwerk 220 weist der zweite Server 210 eine entsprechende Schnittstelle 216 auf. Nach einer alternativen Ausführungsform kann eine Kopie der Blockchain 214 auch lokal auf dem Computersystem 152 gespeichert sein. Dies kann einen netzwerkunabhängigen Zugriff auf die Blockchain 212 erlauben.

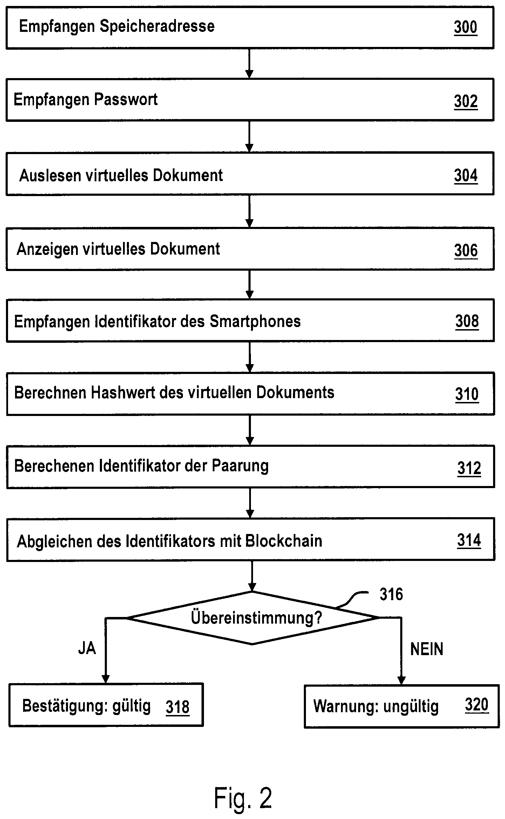

Die Figur 2 zeigt ein Flussdiagramm einer Ausführungsform eines ersten exemplarischen Verfahrens zum Bereitstellen und Prüfen der Gültigkeit eines virtuellen Dokuments. In Block 300 empfängt ein erstes Computersystem eine passwortgeschützte Speicheradresse von einem mobilen zweiten Computersystem, unter welcher das zu prüfende virtuelle Dokument abrufbar ist. Beispielsweise soll ein virtuelles Ausweisdokument des Nutzers des mobilen zweiten Computersystems überprüft werden. Hierzu sendet das mobilen zweiten Computersystem beispielsweise in vordefinierten Zeitintervallen ein unverschlüsseltes Funksignal mit der Speicheradresse, beispielsweise in Form einer URI oder URL. Auf den Empfang der Speicheradresse hin fordert der Nutzer des ersten Computersystems den Nutzer des mobilen zweiten Computersystems beispielsweise auf, zusätzlich das für einen Zugriff auf die Speicheradresse notwendige Passwort bereitzustellen. Alternativ kann der Nutzer des mobilen zweiten Computersystems das Passwort auch in Eigeninitiative bereitstellen oder ein Programm auf dem ersten Computersystem, welches auf die Speicheradresse zugreift, sendet eine entsprechende Anfrage nach dem Passwort automatisch an das mobile zweite Computersystem. In Block 302 empfängt das erste Computersystem das Passwort zum Auslesen des virtuellen Dokuments unter der zuvor empfangenen Speicheradresse. Bei dem Passwort handelt es sich beispielsweise um ein Einmalpasswort, das auf einem Display des mobilen zweiten Computersystems angezeigt wird. Das Passwort kann beispielsweise als QR-Code angezeigt werden. Zusätzlich kann das Passwort beispielsweise mit einem öffentlichen Schlüssel des ersten Computersystems verschlüsselt sein. Alternativer Weise kann der Nutzer des mobilen zweiten Computersystems das Passwort auch mündlich mitteilen. Im Falle einer Verschlüsselung mit einem öffentlichen Schlüssel des ersten Computersystems entschlüsselt das erste Computersystem das Passwort nach dem Empfang mit einem entsprechenden privaten Schlüssel.

In Block 304 wird das virtuelle Dokument unter Verwendung des zuvor empfangenen Einmalpassworts durch das erste Computersystem von der Speicheradresse ausgelesen und in Block 306 auf dem Display des ersten Computersystems angezeigt. Die Übertragung des virtuellen Dokuments kann dabei mittels einer geeigneten Transportverschlüsselung gesichert werden, beispielsweise HTTPS. In Block 308 wird zudem ein Identifikator des mobilen zweiten Computersystems empfangen. Dieser kann nach Ausführungsformen auf eine entsprechende Anfrage hin übertragen werden oder er ist bereits Teil des Übertragungssignals mit der Speicheradresse. Beispielsweise wird die Speicheradresse unter Verwendung des Bluetooth®-Standards übertragen und bei dem Identifikator des mobilen zweiten Computersystems handelt es sich um die Bluetooth®-Adresse des mobilen zweiten Computersystems. In Block 310 wird ein Hash des virtuellen Dokuments berechnet und in Block 312 ein Identifikator für die Paarung aus dem mobilen zweiten Computersystem und dem virtuellen Dokument. Damit dient das mobile zweite Computersystems als ein expliziter Faktor für die Authentifizierung seines Nutzers. In Block 314 wird der berechnete Identifikator für die Paarung mit einer Blockchain abgeglichen, in welcher Identifikatoren von gültigen Paarungen zwischen Computersystemen und virtuellen Dokumenten hinterlegt sind. Wird in Block 316 eine Übereinstimmung zwischen berechnetem und hinterlegtem Identifikator gefunden, so wird in Block 318 die Gültigkeit des virtuellen Dokuments für den vorliegenden Fall bestätigt. Das heißt es wird bestätigt, dass das mobile zweite Computersystem zur Vorlage des virtuellen Dokuments berechtigt ist. Wird in Block 316 keine Übereinstimmung gefunden erfolgt in Block 320 eine Warnung, dass das virtuelle Dokument im vorliegenden Fall nicht gültig ist. Im Falle eines gültigen virtuellen Dokuments, kann sodann der Nutzer des ersten Computersystems den Nutzer des mobilen zweiten Computersystems unter Verwendung des virtuellen Dokuments identifizieren. Hierzu wird beispielsweise das Gesicht der Nutzer des mobilen zweiten Computersystems mit einem auf dem Display des ersten Computersystems angezeigten Gesicht des Inhabers des virtuellen Dokuments verglichen. Anschließend wird das virtuelle Dokument von dem ersten Computersystem gelöscht.

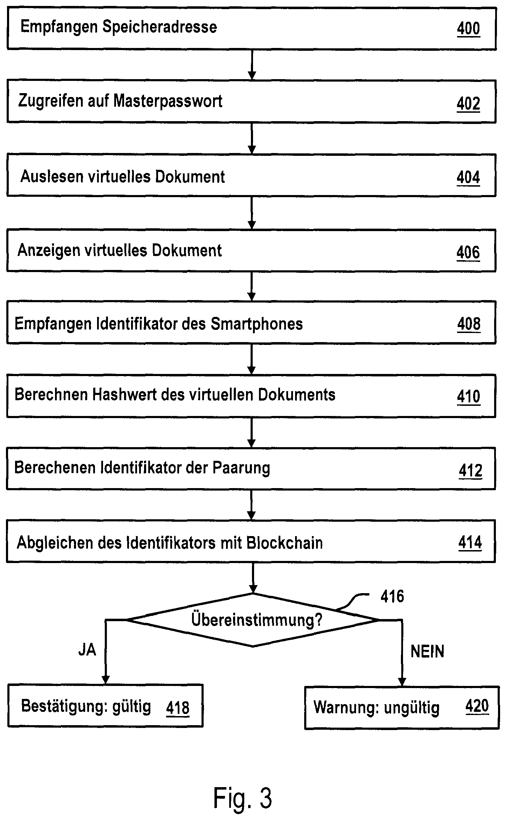

Die Figur 3 zeigt ein Flussdiagramm einer Ausführungsform eines zweiten exemplarischen Verfahrens zum Bereitstellen und Prüfen der Gültigkeit eines virtuellen Dokuments. Dabei ist der Block 400 analog zu dem Block 300 aus Figur 2 und die Blöcke 404 bis 420 sind analog zu den Blöcken 304 bis 320 der Figur 2. Der Unterschied zu dem Verfahren gemäß Figur 2 besteht darin, dass im Falle der Figur 3 keine Einmalpasswort von dem mobilen zweiten Computersystem empfangen wird. Vielmehr verfügt das erste Computersystem über ein Master-Passwort mit welchem es auf alle virtuellen Dokumente, welche in der entsprechenden Datenbank gespeichert sind, zugreifen kann sofern eine konkrete Speicheradresse empfangen wurde. Im Fall des Verfahrens nach Figur 3 handelt es sich bei dem ersten Computersystem beispielsweise um ein Computersystem der Polizei.

Mögliche vorteilhafte Ausführungsformen umfassen eine oder mehrere der folgenden Merkmalskombinationen. Beispielsweise umfasst ein Verfahren zum Bereitstellen und Prüfen der Gültigkeit eines ersten virtuellen Dokuments auf einem ersten Computersystem, wobei das erste virtuelle Dokument mittels eines mobilen zweiten Computersystems für das erste Computersystem bereitgestellt wird, wobei das erste virtuelle Dokument in einer ersten Datenbank eines dritten Computersystems gespeichert ist, wobei in der ersten Datenbank eine Mehrzahl von virtuellen Dokumenten gespeichert ist, wobei das erste Computersystem eine erste Kommunikationsschnittstelle umfasst zur kontaktlosen Kommunikation mit dem mobilen zweiten Computersystem sowie zur Kommunikation mit dem dritten Computersystem über ein Netzwerk, wobei das erste Computersystem ferner ein erstes Display zum Anzeigen des ersten virtuellen Dokuments umfasst, wobei das erste Computersystem Zugriff auf eine kryptographisch gesicherte zweite Datenbank besitzt, welche Identifikatoren für Paarungen aus Computersystemen und den virtuellen Dokumenten der ersten Datenbank umfasst, wobei die Identifikatoren der zweiten Datenbank einen ersten Identifikator einer ersten Paarung aus dem mobilen zweiten Computersystem und dem ersten virtuellen Dokument umfassen:
- Empfangen einer passwortgeschützten Speicheradresse der ersten Datenbank, unter der das erste virtuelle Dokument auslesbar ist,
- Auslesen des ersten virtuellen Dokuments,
- Anzeigen des ersten virtuellen Dokuments auf dem ersten Display des ersten Computersystems,
- Empfangen eines eindeutigen zweiten Identifikators des mobilen zweiten Computersystems,
- Berechnen eines dritten Identifikators unter Verwendung des empfangenen zweiten Identifikators und eines Hashwerts des ersten virtuellen Dokuments,
- Identifizieren des Datenbankeintrags der zweiten Datenbank, in welchem der erste Identifikator gespeichert ist,
- Vergleichen des berechneten dritten Identifikators mit dem in dem identifizierten Datenbankeintrag gespeicherten ersten Identifikator,
- bei Übereinstimmung des berechneten dritten Identifikators mit dem gespeicherten ersten Identifikatoren, Bestätigen der Gültigkeit des virtuellen Dokuments.

Beispielsweise ist ein Master-Passwort zum Auslesen von virtuellen Dokumenten aus der ersten Datenbank in einem geschützten Speicherbereich eines Speichers des ersten Computersystems gespeichert, wobei Auslesen des ersten virtuellen Dokuments unter Verwendung des Master-Passworts erfolgt. Beispielsweise umfasst das Verfahren ferner: Empfangen eines Passworts zum Auslesen des ersten virtuellen Dokuments, wobei das Auslesen des ersten virtuellen Dokuments unter Verwendung des empfangenen Passworts erfolgt. Beispielsweise handelt es sich bei dem empfangenen Passwort um ein Einmalpasswort handelt, mit welchem das virtuelle Dokument unter der passwortgeschützten Speicheradresse einmal ausgelesen werden kann. Beispielsweise umfasst das Empfangen des Passworts: Scannen des Passworts, welches auf einem zweiten Display des mobilen zweiten Computersystems angezeigt wird, mit einem Scanner des ersten Computersystems. Beispielsweise handelt es sich bei dem Scanner um eine Digitalkamera. Beispielsweise wird das empfangene Passwort auf dem zweiten Display als graphischer Code angezeigt. Beispielsweise handelt es sich bei dem graphischen Code um einen QR-Code.

Beispielsweise ist das empfangene Passwort mit einem öffentlichen kryptographischen Schlüssel eines dem ersten Computersystem zugeordneten asymmetrischen Schlüsselpaar verschlüsselt, wobei das Verfahren ferner umfasst: Entschlüsseln des empfangenen Passworts unter Verwendung eines privaten kryptographischen Schlüssels des asymmetrischen Schlüsselpaars. Beispielsweise umfasst das Verfahren ferner: Empfangen einer Speicher-ID der zweiten Datenbank, wobei die Speicher-ID den Eintrag der zweiten Datenbank identifiziert, in welchem der erste Identifikator gespeichert ist, und wobei das Identifizieren des Datenbankeintrags der zweiten Datenbank, in welchem der erste Identifikator gespeichert ist, unter Verwendung der Speicher-ID erfolgt.

Beispielsweise handelt es sich bei der zweiten kryptographisch gesicherten Datenbank um eine Blockchain und der erste Identifikator ist als Transaktion in einem Block der Blockchain gespeichert. Beispielsweise handelt es sich bei der Speicher-ID um eine Transaktions-ID der Transaktion, welche den ersten Identifikator umfasst. Beispielsweise ist eine Kopie der Blockchain in dem Speicher des ersten Computersystems gespeichert. Beispielsweise ist die Kommunikationsschnittstelle dazu konfiguriert mit dem mobilen zweiten Computersystem unter Verwendung des Bluetooth®-Standards zu kommunizieren. Beispielsweise handelt es sich bei dem zweiten Identifikator um die Bluetooth®-Adresse des zweiten Computersystems.

Beispielsweise ist der in der zweiten Datenbank gespeicherte erste Identifikator mit einem privaten kryptographischen Schlüssel eines einem ID-Provider zugeordneten asymmetrischen Schlüsselpaars signiert, wobei das Verfahren ferner umfasst: Überprüfen der Signatur des in dem identifizierten Datenbankeintrag gespeicherten ersten Identifikator durch das erste Computersystem unter Verwendung eines öffentlichen kryptographischen Schlüssels des dem ID-Provider zugeordneten asymmetrischen Schlüsselpaars.

Beispielsweise umfasst die zweite Datenbank zusätzlich den öffentlichen kryptographischen Schlüssel des ID-Providers. Beispielsweise umfasst der Datenbankeintrag der zweiten Datenbank zusätzlich den öffentlichen kryptographischen Schlüssel des ID-Providers. Beispielsweise handelt es sich bei dem ersten Computersystem und/oder dem mobilen zweiten Computersystem um ein Mobilfunkgerät, insbesondere ein Smartphone. Beispielsweise handelt es sich bei dem ersten virtuellen Dokument um ein virtuelles Ausweisdokument. Beispielsweise umfasst der Datenbankeintrag der zweiten Datenbank, in welchem der erste Identifikator gespeichert ist, ein Ablaufdatum, welches ein Ende der Gültigkeit der ersten Paarung festlegt. Beispielsweise das Verfahren ferner umfasst: Prüfen, ob die zweite Datenbank zusätzlich einen Sperreintrag umfasst, welcher den ersten Identifikator als gesperrt kennzeichnet, Zurückweisen des ersten virtuellen Dokuments als ungültig, falls ein Sperreintrag aufgefunden wird.

Beispielsweise ist ein erstes Computersystem zum Bereitstellen und Prüfen der Gültigkeit eines ersten virtuellen Dokuments dazu konfiguriert ein Verfahren nach einem der vorangehenden Beispiele auszuführen, wobei das erste virtuelle Dokument mittels eines mobilen zweiten Computersystems für das erste Computersystem bereitgestellt wird, wobei das erste virtuelle Dokument in einer ersten Datenbank eines dritten Computersystems gespeichert ist, wobei in der ersten Datenbank eine Mehrzahl von virtuellen Dokumenten gespeichert ist, wobei das erste Computersystem eine erste Kommunikationsschnittstelle umfasst zur kontaktlosen Kommunikation mit dem mobilen zweiten Computersystem sowie zur Kommunikation mit dem dritten Computersystem über ein Netzwerk, wobei das erste Computersystem ferner ein erstes Display zum Anzeigen des ersten virtuellen Dokuments umfasst, wobei das erste Computersystem Zugriff auf eine kryptographisch gesicherte zweite Datenbank besitzt, welche Identifikatoren für Paarungen aus Computersystemen und den virtuellen Dokumenten der ersten Datenbank umfasst, wobei die Identifikatoren der zweiten Datenbank einen ersten Identifikator einer ersten Paarung aus dem mobilen zweiten Computersystem und dem ersten virtuellen Dokument umfassen.

### Bezugszeichenliste

- 100: Nutzer des mobilen Computersystems
- 102: mobiles Computersystem
- 104: Speicher
- 106: geschützter Speicherbereich
- 108: Einmalpasswort
- 110: Speicheradresse des virtuellen Dokuments
- 111: Identifikator des mobilen Computersystems
- 112: Prozessor
- 113: kryptographisches Protokoll
- 114: Instruktionen
- 118: Eingabeinterface
- 120: Display
- 122: Schnittstelle
- 150: Nutzer des Computersystems
- 152: Computersystem
- 154: Speicher
- 156: geschützter Speicherbereich
- 158: privater Schlüssel
- 160: öffentlicher Schlüssel
- 164: Prozessor
- 166: kryptographisches Protokoll
- 168: Instruktionen
- 170: Eingabeinterface
- 172: Scanner
- 174: Display
- 176: Schnittstelle
- 180: Funksignal
- 200: erster Server
- 202: Datenbank
- 204: virtuelles Dokument
- 206: Schnittstelle
- 210: zweiter Server
- 212: Blockchain
- 214: Identifikator einer Paarung
- 216: Schnittstelle
- 220: Netzwerk

## Patentansprüche

1. Verfahren zum Bereitstellen und Prüfen der Gültigkeit eines ersten virtuellen Dokuments (204) auf einem ersten Computersystem (152), wobei das erste virtuelle Dokument (204) mittels eines mobilen zweiten Computersystems (102) für das erste Computersystem (152) bereitgestellt wird,
wobei das erste virtuelle Dokument (204) in einer ersten Datenbank (202) eines dritten Computersystems (200) gespeichert ist, wobei in der ersten Datenbank (202) eine Mehrzahl von virtuellen Dokumenten gespeichert ist,
wobei das erste Computersystem (152) eine erste Kommunikationsschnittstelle (176) umfasst zur kontaktlosen Kommunikation mit dem mobilen zweiten Computersystem (102) sowie zur Kommunikation mit dem dritten Computersystem (200) über ein Netzwerk (220), wobei das erste Computersystem (152) ferner ein erstes Display (174) zum Anzeigen des ersten virtuellen Dokuments (204) umfasst,
wobei das erste Computersystem (152) Zugriff auf eine kryptographisch gesicherte zweite Datenbank (212) besitzt, welche Identifikatoren für Paarungen aus Computersystemen und den virtuellen Dokumenten (204) der ersten Datenbank (202) umfasst, wobei die Identifikatoren der zweiten Datenbank (212) einen ersten Identifikator (214) einer ersten Paarung aus dem mobilen zweiten Computersystem (102) und dem ersten virtuellen Dokument (204) umfassen,
wobei das Verfahren umfasst:
• Empfangen einer passwortgeschützten Speicheradresse (110) der ersten Datenbank (202), unter der das erste virtuelle Dokument (204) auslesbar ist,
• Auslesen des ersten virtuellen Dokuments (204),
• Anzeigen des ersten virtuellen Dokuments (204) auf dem ersten Display (174) des ersten Computersystems (152),
• Empfangen eines eindeutigen zweiten Identifikators (111) des mobilen zweiten Computersystems (102),
• Berechnen eines dritten Identifikators unter Verwendung des empfangenen zweiten Identifikators (111) und eines Hashwerts des ersten virtuellen Dokuments (204),
• Identifizieren des Datenbankeintrags der zweiten Datenbank (212), in welchem der erste Identifikator (214) gespeichert ist,
• Vergleichen des berechneten dritten Identifikators mit dem in dem identifizierten Datenbankeintrag gespeicherten ersten Identifikator (214),
• bei Übereinstimmung des berechneten dritten Identifikators mit dem gespeicherten ersten Identifikator (214), Bestätigen der Gültigkeit des virtuellen Dokuments (204).

2. Verfahren nach Anspruch 1, wobei ein Master-Passwort zum Auslesen von virtuellen Dokumenten aus der ersten Datenbank (202) in einem geschützten Speicherbereich (156) eines Speichers (154) des ersten Computersystems (152) gespeichert ist,
wobei Auslesen des ersten virtuellen Dokuments (204) unter Verwendung des Master-Passworts erfolgt.

3. Verfahren nach Anspruch 1, wobei das Verfahren ferner umfasst:
Empfangen eines Passworts (108) zum Auslesen des ersten virtuellen Dokuments (204), wobei das Auslesen des ersten virtuellen Dokuments (204) unter Verwendung des empfangenen Passworts (108) erfolgt.

4. Verfahren nach Anspruch 3, wobei das Empfangen des Passworts (108) umfasst:
Scannen des Passworts (108), welches auf einem zweiten Display (120) des mobilen zweiten Computersystems (102) angezeigt wird, mit einem Scanner (172) des ersten Computersystems (102).

5. Verfahren nach Anspruch 4, wobei das empfangene Passwort (108) auf dem zweiten Display (120) als graphischer Code angezeigt wird.

6. Verfahren nach einem der Ansprüche 3 bis 5, wobei das empfangene Passwort (108) mit einem öffentlichen kryptographischen Schlüssel (160) eines dem ersten Computersystem (152) zugeordneten asymmetrischen Schlüsselpaar verschlüsselt ist, wobei das Verfahren ferner umfasst:
Entschlüsseln des empfangenen Passworts (108) unter Verwendung eines privaten kryptographischen Schlüssels (158) des asymmetrischen Schlüsselpaars.

7. Verfahren nach einem der vorangehenden Ansprüche, wobei das Verfahren ferner umfasst:
Empfangen einer Speicher-ID der zweiten Datenbank (212), wobei die Speicher-ID den Eintrag der zweiten Datenbank (212) identifiziert, in welchem der erste Identifikator (214) gespeichert ist, und wobei das Identifizieren des Datenbankeintrags der zweiten Datenbank (212), in welchem der erste Identifikator (214) gespeichert ist, unter Verwendung der Speicher-ID erfolgt.

8. Verfahren nach einem der vorhergehenden Ansprüche, wobei es sich bei der zweiten kryptographisch gesicherten Datenbank um eine Blockchain (212) handelt und der erste Identifikator (214) als Transaktion in einem Block der Blockchain gespeichert ist.

9. Verfahren nach Anspruch 8, wobei es sich bei der Speicher-ID um eine Transaktions-ID der Transaktion handelt, welche den ersten Identifikator (214) umfasst, und/oder
wobei eine Kopie der Blockchain in dem Speicher (154) des ersten Computersystems (152) gespeichert ist.

10. Verfahren nach einem der vorhergehenden Ansprüche, wobei die Kommunikationsschnittstelle (176) dazu konfiguriert ist mit dem mobilen zweiten Computersystem (102) unter Verwendung des Bluetooth®-Standards zu kommunizieren und/oder
wobei es sich bei dem zweiten Identifikator (111) um die Bluetooth®-Adresse des zweiten Computersystems (102) handelt.

11. Verfahren nach einem der vorangehenden Ansprüche, wobei der in der zweiten Datenbank (212) gespeicherte erste Identifikator (214) mit einem privaten kryptographischen Schlüssel eines einem ID-Provider zugeordneten asymmetrischen Schlüsselpaars signiert ist,
wobei das Verfahren ferner umfasst:
Überprüfen der Signatur des in dem identifizierten Datenbankeintrag gespeicherten ersten Identifikator (214) durch das erste Computersystem (152) unter Verwendung eines öffentlichen kryptographischen Schlüssels des dem ID-Provider zugeordneten asymmetrischen Schlüsselpaars.

12. Verfahren nach Anspruch 11, wobei die zweite Datenbank (212) zusätzlich den öffentlichen kryptographischen Schlüssel des ID-Providers umfasst.

13. Verfahren nach Anspruch 12, wobei der Datenbankeintrag der zweiten Datenbank (212) zusätzlich den öffentlichen kryptographischen Schlüssel des ID-Providers umfasst.

14. Verfahren nach einem der vorhergehenden Ansprüche, wobei es sich bei dem ersten virtuellen Dokument (204) um ein virtuelles Ausweisdokument handelt und/oder
wobei der Datenbankeintrag der zweiten Datenbank (212), in welchem der erste Identifikator (214) gespeichert ist, ein Ablaufdatum umfasst, welches ein Ende der Gültigkeit der ersten Paarung festlegt, und/oder
wobei das Verfahren ferner umfasst:
Prüfen, ob die zweite Datenbank (212) zusätzlich einen Sperreintrag umfasst, welcher den ersten Identifikator (214) als gesperrt kennzeichnet,
Zurückweisen des ersten virtuellen Dokuments (204) als ungültig, falls ein Sperreintrag aufgefunden wird.

15. Erstes Computersystem (152) zum Bereitstellen und Prüfen der Gültigkeit eines ersten virtuellen Dokuments (204), wobei das erste virtuelle Dokument (204) mittels eines mobilen zweiten Computersystems (102) für das erste Computersystem (152) bereitgestellt wird,
wobei das erste virtuelle Dokument (204) in einer ersten Datenbank (202) eines dritten Computersystems (200) gespeichert ist, wobei in der ersten Datenbank (202) eine Mehrzahl von virtuellen Dokumenten (204) gespeichert ist,
wobei das erste Computersystem (152) eine erste Kommunikationsschnittstelle (176) umfasst zur kontaktlosen Kommunikation mit dem mobilen zweiten Computersystem (102) sowie zur Kommunikation mit dem dritten Computersystem (200) über ein Netzwerk (220), wobei das erste Computersystem (152) ferner ein erstes Display (174) zum Anzeigen des ersten virtuellen Dokuments (204) umfasst,
wobei das erste Computersystem (152) Zugriff auf eine kryptographisch gesicherte zweite Datenbank (212) besitzt, welche Identifikatoren für Paarungen aus Computersystemen und den virtuellen Dokumenten der ersten Datenbank (202) umfasst, wobei die Identifikatoren der zweiten Datenbank (212) einen ersten Identifikator (214) einer ersten Paarung aus dem mobilen zweiten Computersystem (102) und dem ersten virtuellen Dokument (204) umfassen,
wobei das erste Computersystem (152) dazu konfiguriert ist ein Verfahren nach einem den Ansprüche 1 bis 14 auszuführen.

## Claims

1. Method for providing and checking the validity of a first virtual document (204) on a first computer system (152), wherein the first virtual document (204) is provided by means of a mobile second computer system (102) for the first computer system (152), wherein the first virtual document (204) is stored in a first database (202) of a third computer system (200), wherein a plurality of virtual documents is stored in the first database (202),
wherein the first computer system (152) comprises a first communication interface (176) for contactless communication with the mobile second computer system (102) and for communication with the third computer system (200) via a network (220), wherein the first computer system (152) also comprises a first display (174) for displaying the first virtual document (204),
wherein the first computer system (152) has access to a cryptographically secured second database (212), which comprises identifiers for pairings consisting of computer systems and the virtual documents (204) of the first database (202), wherein the identifiers of the second database (212) comprise a first identifier (214) of a first pairing consisting of the mobile second computer system (102) and the first virtual document (204),
wherein the method comprises the steps of:
• receiving a password-protected storage address (110) of the first database (202) at which the first virtual document (204) may be read,
• reading the first virtual document (204),
• displaying the first virtual document (204) on the first display (174) of the first computer system (152),
• receiving a unique second identifier (111) of the mobile second computer system (102),
• calculating a third identifier using the received second identifier (111) and a hash value of the first virtual document (204),
• identifying the database entry of the second database (212) in which the first identifier (214) is stored,
• comparing the calculated third identifier with the first identifier (214) stored in the identified database entry,
• if the calculated third identifier matches the stored first identifier (214), confirming the validity of the virtual document (204).

2. Method according to claim 1, wherein a master password for reading virtual documents from the first database (202) is stored in a protected memory area (156) of a memory (154) of the first computer system (152),
wherein the first virtual document (204) is read with use of the master password.

3. Method according to claim 1, wherein the method further comprises the step of:
receiving a password (108) for reading the first virtual document (204), wherein the first virtual document (204) is read with use of the received password (108).

4. Method according to claim 3, wherein the receiving of the password (108) comprises the step of:
scanning the password (108), which is displayed on a second display (120) of the mobile second computer system (102), using a scanner (172) of the first computer system (102).

5. Method according to claim 4, wherein the received password (108) is displayed as a graphical code on the second display (120).

6. Method according to one of claims 3 to 5, wherein the received password (108) is encrypted using a public cryptographic key (160) of an asymmetric key pair associated with the first computer system (152), wherein the method also comprises the step of:
decrypting the received password (108) with use of a private cryptographic key (158) of the asymmetric key pair.

7. Method according to one of the preceding claims, wherein the method also comprises:
receiving a storage ID of the second database (212), wherein the storage ID identifies the entry of the second database (212) in which the first identifier (214) is stored, and
wherein the database entry of the second database (212) in which the first identifier (214) is stored is identified using the storage ID.

8. Method according to one of the preceding claims, wherein the second cryptographic secured database is a blockchain (212) and the first identifier (214) is stored as a transaction in a block of the blockchain.

9. Method according to claim 8, wherein the storage ID is a transaction ID of the transaction comprising the first identifier (214), and/or
wherein a copy of the blockchain is stored in the memory (154) of the first computer system (152).

10. Method according to one of the preceding claims, wherein the communications interface (176) is configured to communicate with the mobile second computer system (102) using the Bluetooth® standard, and/or
wherein the second identifier (111) is the Bluetooth® address of the second computer system (102).

11. Method according to one of the preceding claims, wherein the first identifier (214) stored in the second database (212) is signed with a private cryptographic key of an asymmetric key pair associated with an ID provider,
wherein the method also comprises the step of:
by means of the first computer system (152) with use of a public cryptographic key of the asymmetric key pair associated with the ID provider, checking the signature of the first identifier (214) stored in the identified database entry.

12. Method according to claim 11, wherein the second database (212) additionally comprises the public cryptographic key of the ID provider.

13. Method according to claim 12, wherein the database entry of the second database (212) additionally comprises the public cryptographic key of the ID provider.

14. Method according to one of the preceding claims, wherein the first virtual document (204) is a virtual identity document, and/or
wherein the database entry of the second database (212) in which the first identifier (214) is stored comprises an expiry date, which defines the end of the validity of the first pairing, and/or
wherein the method further comprises the steps of:
checking whether the second database (212) additionally comprises a lock entry which characterises the first identifier (214) as being locked,
rejecting the first virtual document (204) as invalid if a lock entry is found.

15. First computer system (152) for providing and checking the validity of a first virtual document (204), wherein the first virtual document (204) is provided for the first computer system (152) by means of a mobile second computer system (102),
wherein the first virtual document (204) is stored in a first database (202) of a third computer system (200), wherein a plurality of virtual documents (204) is stored in the first database (202),
wherein the first computer system (152) comprises a first communications interface (176) for contactless communication with the mobile second computer system (102) and for communication with the third computer system (200) via a network (220), wherein the first computer system (152) also comprises a first display (174) for displaying the first virtual document (204),
wherein the first computer system (152) has access to a cryptographically secured second database (212), which comprises identifiers for pairings consisting of computer systems and virtual documents of the first database (202), wherein the identifiers of the second database (212) comprise a first identifier (214) of a first pairing consisting of the mobile second computer system (102) and the first virtual document (204),
wherein the first computer system (152) is configured to carry out a method according to one of claims 1 to 14.

## Revendications

1. Procédé de fourniture et de contrôle de la validité d'un premier document virtuel (204) sur un premier système informatique (152), dans lequel le premier document virtuel (204) est fourni au premier système informatique (152) au moyen d'un deuxième système informatique mobile (102),
dans lequel le premier document virtuel (204) est stocké dans une première banque de données (202) d'un troisième système informatique (200), où une multiplicité de documents virtuels est stockée dans la première banque de données (202),
dans lequel le premier système informatique (152) comprend une première interface de communication (176) pour la communication sans contact avec le deuxième système informatique mobile (102) ainsi que pour la communication avec le troisième système informatique (200) par le biais d'un réseau (220), où le premier système informatique (152) comprend en outre un premier affichage (174) pour l'affichage du premier document virtuel (204),
dans lequel le premier système informatique (152) possède un accès à une deuxième banque de données (212) sécurisée de manière cryptographique, laquelle comprend des identificateurs pour des appariements de systèmes informatiques et du document virtuel (204) de la première banque de données (202), où les identificateurs de la deuxième banque de données (212) comprennent un premier identificateur (214) d'un premier appariement à base du deuxième système informatique mobile (102) et du premier document virtuel (204),
où le procédé comprend :
• la réception d'une adresse de stockage (110) protégée par un mot de passe de la première banque de données (202), à laquelle le premier document virtuel (204) est lisible,
• la lecture du premier document virtuel (204),
• l'affichage du premier document virtuel (204) sur le premier affichage (174) du premier système informatique (152),
• la réception d'un deuxième identificateur (111) univoque du deuxième système informatique mobile (102),
• le calcul d'un troisième identificateur moyennant l'emploi du deuxième identificateur (111) reçu et d'une valeur de hachage du premier document virtuel (204),
• l'identification de l'entrée de banque de données de la deuxième banque de données (212) dans laquelle le premier identificateur (214) est stocké,
• la comparaison du troisième identificateur calculé avec le premier identificateur (214) stocké dans l'entrée de banque de données identifiée,
• la confirmation de la validité du document virtuel (204) en cas de concordance du troisième identificateur calculé avec le premier identificateur (214) stocké.

2. Procédé selon la revendication 1, dans lequel un mot de passe maître est stocké dans une zone de mémoire sécurisée (156) d'une mémoire (154) du premier système informatique (152) pour la lecture du document virtuel à partir de la première banque de données (202),
dans lequel la lecture du premier document virtuel (204) a lieu moyennant l'emploi du mot de passe maître.

3. Procédé selon la revendication 1, où le procédé comprend en outre :
la réception d'un mot de passe (108) pour la lecture du premier document virtuel (204), où la lecture du premier document virtuel (204) a lieu moyennant l'emploi du mot de passe (108) reçu.

4. Procédé selon la revendication 3, dans lequel la réception du mot de passe (108) comprend :
le balayage du mot de passe (108), lequel est indiqué sur un deuxième affichage (120) du deuxième système informatique mobile (102) avec un scanner (172) du premier système informatique (102).

5. Procédé selon la revendication 4, dans lequel le mot de passe (108) reçu est affiché sous forme de code graphique sur le deuxième affichage (120).

6. Procédé selon l'une des revendications 3 à 5, dans lequel le mot de passe (108) reçu est crypté avec une clé cryptographique publique (160) d'une paire de clés asymétrique associée au premier système informatique (152), où le procédé comprend en outre :
le décryptage du mot de passe (108) reçu moyennant l'emploi d'une clé cryptographique privée (158) de la paire de clés asymétrique.

7. Procédé selon l'une des revendications précédentes, où le procédé comprend en outre :
la réception d'un ID de mémoire de la deuxième banque de données (212), où l'ID de mémoire identifie l'entrée de la deuxième banque de données (212) dans laquelle le premier identificateur (214) est stocké, et où l'identification de l'entrée de la banque de données de la deuxième banque de données (212), dans laquelle le premier identificateur (214) est stocké, a lieu moyennant l'emploi de l'ID de mémoire.

8. Procédé selon l'une des revendications précédentes, dans lequel, dans le cas de la deuxième banque de données sécurisée par cryptographie il s'agit une chaîne de blocs (212) et le premier identificateur (214) est stocké sous forme de transaction dans un bloc de la chaine de blocs.

9. Procédé selon la revendication 8, dans lequel, dans le cas de l'ID de mémoire, il s'agit d'un ID de transaction de la transaction, lequel comprend le premier identificateur (214), et/ou
dans lequel la copie de la chaîne de blocs est stockée dans la mémoire (154) du premier système informatique (152).

10. Procédé selon l'une des revendications précédentes, dans lequel l'interface de communication (176) est conçue pour communiquer avec le deuxième système informatique mobile (102) moyennant l'emploi d'une norme Bluetooth®, et/ou
dans lequel, dans le cas du deuxième identificateur (111), il s'agit de l'adresse Bluetooth® du deuxième système informatique (102).

11. Procédé selon l'une des revendications précédentes, dans lequel le premier identificateur (214) stocké dans la deuxième banque de données (212) est signé avec une clé cryptographique privée d'une paire de clés asymétrique associée à un fournisseur d'ID,
où le procédé comprend en outre :
le contrôle de la signature du premier identificateur (214) stocké dans l'entrée de banque de données identifiée par le premier système informatique (152) moyennant l'emploi d'une clé cryptographique publique de la paire de clés asymétrique associe au fournisseur d'ID.

12. Procédé selon la revendication 11, dans lequel la deuxième banque de données (212) comprend en outre la clé cryptographique publique du fournisseur d'ID.

13. Procédé selon la revendication 12, sans lequel l'entrée de banque de données de la deuxième banque de données (212) comprend en outre la clé cryptographique publique du fournisseur d'ID.

14. Procédé selon l'une des revendications précédentes, dans lequel, dans le cas du premier document virtuel (204), il s'agit d'un document d'identité virtuel, et/ou
dans lequel l'entrée de banque de données de la deuxième banque de données (212) dans laquelle le premier identificateur (214) est stocké est une date d'expiration, laquelle fixe une fin de la validité du premier appariement, et/ou
où le procédé comprend en outre :
le contrôle si la deuxième banque de données (212) comprend en outre une entrée de blocage, laquelle caractérise le premier identificateur (214) comme étant bloqué,
le rejet du premier document virtuel (204) comme étant invalide dans le cas où une entrée de blocage est retrouvée.

15. Premier système informatique (152) de fourniture et de contrôle de la validité d'un premier document virtuel (204), dans lequel le premier document virtuel (204) est fourni au premier système informatique (152) au moyen d'un deuxième système informatique mobile (102),
dans lequel le premier document virtuel (204) est stocké dans une première banque de données (202) d'un troisième système informatique (200), où une multiplicité de documents virtuels (204) est stockée dans la première banque de données (202),
où le premier système informatique (152) comprend une première interface de communication (176) pour la communication sans contact avec le deuxième système informatique mobile (102) ainsi que pour la communication avec le troisième système informatique (200) par le biais d'un réseau (220), où le premier système informatique (152) comprend en outre un premier affichage (174) pour l'affichage du premier document virtuel (204),
où le premier système informatique (152) possède un accès à une deuxième banque de données (212) sécurisée de manière cryptographique, laquelle comprend des identificateurs pour des appariements de systèmes informatiques et des documents virtuels de la première banque de données (202), où les identificateurs de la deuxième banque de données (212) comprennent un premier identificateur (214) d'un premier appariement à base du deuxième système informatique mobile (102) et du premier document virtuel (204),
où le premier système informatique (152) est conçu pour exécuter un procédé selon l'une des revendications 1 à 14.
